# DEMANDE DE BREVET EUROPEEN

(11) **EP 3 671 562 A1**
(43) Date de publication de la demande: **24.06.2020**
(21) Numéro de dépôt: 18306807.1
(22) Date de dépôt: 21.12.2018
(51) Int. Cl.: G06K 19/02, G06K 19/077

(54) **PROCÉDÉ DE FABRICATION D'UNE CARTE À PUCE RADIOFRÉQUENCE METALLIQUE À PERMITTIVITE AMÉLIORÉE AVEC PERFORATIONS ÉTENDUES**

(71) Demandeur: Thales Dis France SA, 92190 Meudon (FR)
(72) Inventeur: MENDEZ, Lucile, 13881 Gémenos Cedex (FR); COLOMBARD, Claude, 13881 Gémenos Cedex (FR); SEBAN, Frederick, 13881 Gémenos Cedex (FR); BUYUKKALENDER, Arek, 13881 Gémenos Cedex (FR); MERIDIANO, Jean-Luc, 13881 Gémenos Cedex (FR)
(74) Mandataire: Milharo, Emilien

(57) **Abrégé**

L'invention concerne un procédé de fabrication d'un insert métallique pour carte à puce radiofréquence, ledit procédé comprenant les étapes de formation ou fourniture d'un assemblage (1) comportant un substrat isolant (2) portant :
- au moins une spire d'antenne (3) avec deux extrémités terminales (4, 5) ou une interface de couplage, reposant sur ledit substrat,
- une plaque de métal (7) comportant des perforations de permittivité radiofréquence et une cavité (8) de réception d'un module à puce radiofréquence, traversant la plaque et agencées respectivement en regard de ladite spire d'antenne et de ses extrémités ;
Le procédé est caractérisé en ce qu'il comprend la formation dans ladite plaque d'au moins une fente (19, 21) ou d'au moins deux fentes (19, 21) s'étendant chacune entre des perforations situées sur des portions de spires (L3, L4), lesdites portions de spires étant symétriquement ou diamétralement opposées l'une de l'autre ou séparées par une portion de surface (6) de couplage.

L'invention concerne également une carte correspondante à celle obtenue par le procédé.

## Description

### Domaine de l'invention.

L'invention concerne le domaine des cartes à puce sans-contact comportant une forte teneur métallique ou une plaque métallique s'étendant jusqu'à au moins un bord de la carte et un module à puce de circuit intégré radiofréquence.

Elle vise en particulier la fabrication de carte à puce comportant au moins une plaque métallique dans le corps de carte et présentant une permittivité électromagnétique améliorée.

Les cartes à puce peuvent être du type hybride (contacts et sans-contact) ou purement sans-contact (sans bornier de contacts électriques 5). La plaque est en principe comprise dans un insert recouvert par au moins une feuille ou film de couverture externe.

Les cartes à puce peuvent avoir un module de carte à puce comportant un transpondeur radiofréquence avec la puce et l'antenne portées sur un substrat isolant du module. Les modules de carte à puce radiofréquence sont généralement encartés dans une cavité du corps de carte. Ils peuvent aussi connecter une antenne logée dans le corps de carte via des éléments d'interconnexion électriques, reliant des plages terminales de l'antenne à des zones de connexion de la puce placées sur le module.

Un module radiofréquence de carte à puce peut être couplé avec une antenne passive ou relais logée dans le corps de carte.

L'invention vise plus particulièrement les cartes métalliques bancaires, de paiement, de transport.

### Art antérieur

Le brevet FR 2743649 décrit un module de carte à puce à antenne et /ou plages de contact pouvant être incorporé dans une cavité de corps de carte ou pouvant former une étiquette électronique RFID.

Par ailleurs, on connait également des dispositifs radiofréquences hybrides, tels que des cartes à contacts et sans-contact, comportant un module de carte à puce à contacts incorporé dans un corps de carte et connecté à une antenne logée dans le corps de carte.

Par ailleurs, il existe des cartes bancaires comportant des éléments métalliques en insert à l'intérieur du corps de carte en matière plastique ou en surface externe du corps de carte tel de l'aluminium, du titane, de l'or. Le métal procure une sensation de lourdeur de la carte qui est très appréciée par les utilisateurs. Il donne aussi un aspect esthétique visible qui en fait un produit haut de gamme pour privilégiés.

La demande de brevet US2015/0269477 A1 décrit une carte à puce métallique comportant une antenne sur un substrat et une plaque de métal avec une série de trous, disposée sur le substrat. Les trous sont agencés au-dessus du parcours des spires de l'antenne.

Les performances de communications radiofréquence testées par les inventeurs sont insuffisantes malgré la présence de trous au-dessus du parcours des spires d'antenne.

Il y a actuellement une forte demande pour ce genre de carte à puce intégrant des matières lourdes mais la fabrication n'est pas aisé ou le rapport poids / performance de communication radiofréquence n'est pas optimal.

### Problème technique.

L'invention vise à résoudre les inconvénients précités.

En particulier, l'invention vise une structure de carte métallique qui comporte de meilleures performances de communication que dans l'art antérieur.

La carte peut de préférence avoir également une structure satisfaisant notamment les contraintes de tenue mécanique du standard ISO des cartes à puce et autres tests de durabilité dans le temps. De telles cartes peuvent être conformes notamment au standard ISO 78016 et/ ou ISO / IEC 14443 ou équivalents.

### Résumé de l'invention.

L'invention consiste selon un aspect préféré en une disposition particulière des trous dans une plaque de métal de manière à augmenter la permittivité de la plaque métallique eu égard un champ électromagnétique d'un lecteur radiofréquence.

Les trous sont de préférence sous forme de fentes allongées disposées transversalement sur la plaque ou traversant une région centrale de la plaque ; Les fentes favorisent une induction entre deux bords ou côtés opposés de l'antenne disposés sur le parcours de spires d'antenne.

Cette structure permet d'étendre le champ radiofréquence sur l'antenne et permet le couplage avec un lecteur.

A cet effet, l'invention a pour objet un procédé de fabrication d'un insert métallique pour carte à puce radiofréquence, ledit procédé comprenant les étapes de formation ou fourniture d'un assemblage comportant un substrat isolant portant :
- au moins une spire d'antenne avec deux extrémités terminales ou une interface de couplage, reposant sur ledit substrat,
- une plaque de métal comportant des perforations de permittivité radiofréquence et une cavité de réception d'un module à puce radiofréquence, traversant la plaque et agencées respectivement en regard de ladite spire d'antenne et de ses extrémités ;

Le procédé est caractérisé en ce qu'il comprend la formation dans ladite plaque d'au moins une fente ou d'au moins deux fentes s'étendant chacune entre des perforations situées sur des portions de spire, lesdites portions de spires étant symétriquement ou diamétralement opposées l'une de l'autre ou séparées par une portion de surface de couplage.

Selon d'autres caractéristiques :
- Au moins deux fentes (s'étendant le long de deux portions de ladite spire, lesdites deux portions étant symétriquement ou diamétralement opposées l'une à l'autre ou séparées par une surface (6) de couplage ;
- Lesdites perforations comprennent, au moins une fente s'étendant le long d'une portion de ladite au moins une spire ;
- Lesdites portions de spire s'étendent de préférence à proximité immédiate de bordures latérales ou longitudinales de la plaque ;
- Lesdites fentes forment un passage électromagnétiquement perméable au rayonnement induit par les spires ;
- La puce peut être connectée de manière ohmique ou capacitive ou inductive à ladite antenne ;
- L'insert peut être recouvert d'au moins une ou plusieurs feuilles polymère de couverture ou de décoration.

L'invention a également pour objet un insert métallique pour carte à puce radiofréquence, ledit insert comprenant un assemblage d'un substrat isolant avec une plaque de métal, ledit substrat portant au moins une spire d'antenne et ladite plaque comportant des perforations de permittivité radiofréquence et une cavité de réception d'un module à puce radiofréquence, lesdites perforations étant agencées en regard de ladite spire d'antenne ; L'insert est caractérisé en ce qu'il comprend dans ladite plaque, au moins une fente ou au moins deux fentes s'étendant chacune entre des perforations situées sur des portions de spires, lesdites portions de spires étant symétriquement ou diamétralement opposées l'une de l'autre ou séparées par une portion de surface de couplage.

Selon d'autres caractéristiques :
- Les perforations comprennent de préférence au moins une fente s'étendant le long d'une portion de ladite au moins une spire ou au moins deux fentes s'étendant le long de deux portions de ladite spire, lesdites deux portions étant symétriquement ou diamétralement opposées l'une à l'autre ou séparées par une surface de couplage,
- L'assemblage peut comprendre des bâtonnets de ferrite introduits dans les fentes pour améliorer la communication vers au moins une face de la carte ;

Ainsi, on peut obtenir des cartes à puce comprenant l'insert ci-dessus.

### Descriptif des figures :

- La figure 1 illustre une antenne réalisée sur un substrat isolant selon une étape d'un mode de mise en oeuvre procédé de l'invention;
- La figure 2 illustre des ouvertures réalisées dans une plaque métallique selon un mode préféré de mise en oeuvre du procédé de l'invention ;
- La figure 3 illustre un substrat avec antenne individualisée, extraite de la feuille de la figure 1, et avec un module à puce radiofréquence connecté tel que testé par les inventeurs avec la plaque de la figure 2;

- La figure 4 illustre un assemblage conforme au mode préféré de mise en oeuvre de l'invention ;
- La figure 5 illustre des étapes du procédé d'un mode préféré de mise en oeuvre du procédé de l'invention.

### Description.

Le procédé de fabrication d'un insert métallique pour carte à puce radiofréquence va maintenant être décrit.

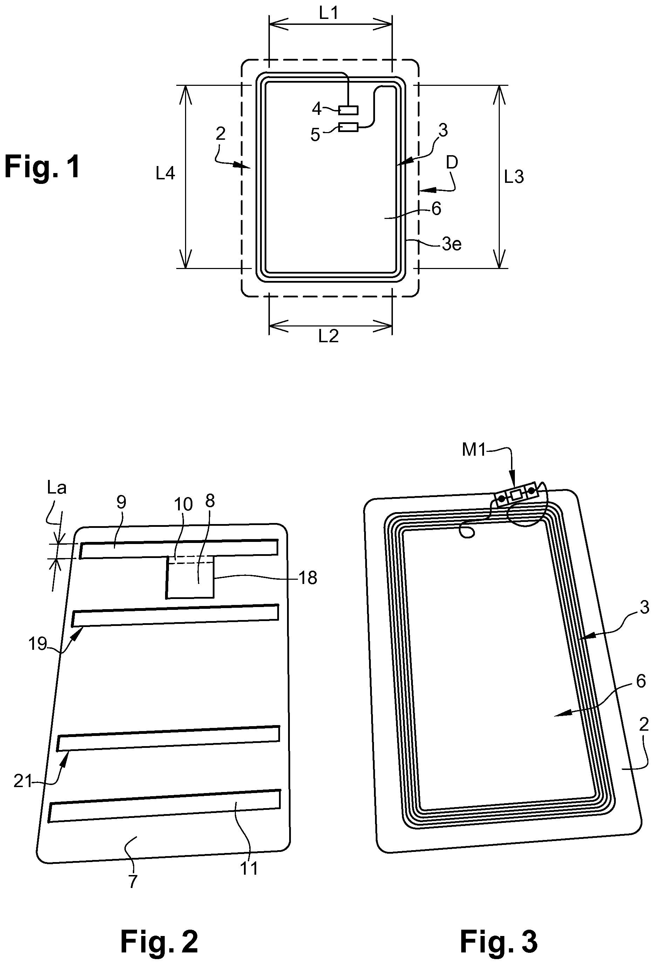

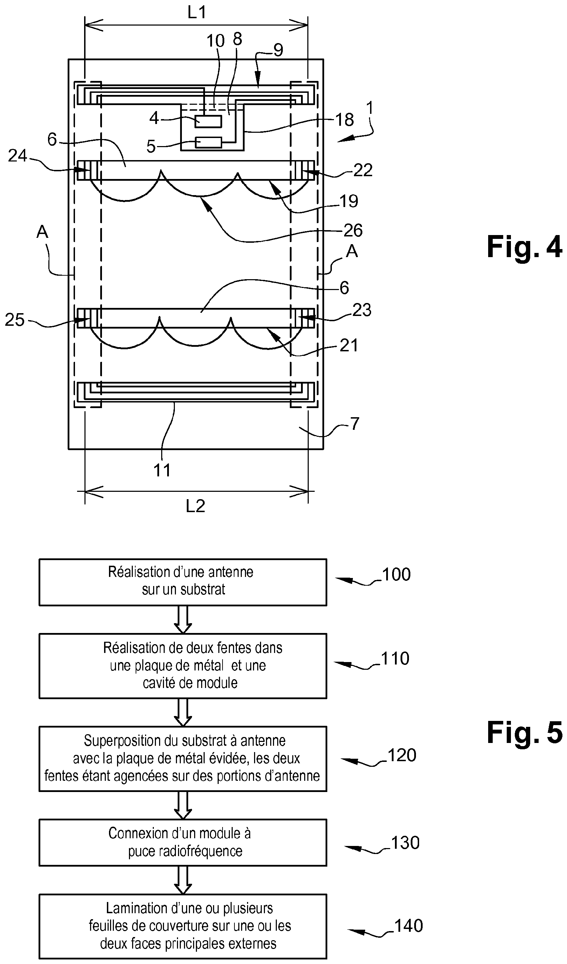

Selon une caractéristique, le procédé prévoit la formation ou la fourniture d'un assemblage 1 (figure 4) comportant un substrat isolant 2 visible sur la figure 1 ou 3 et une plaque de métal visible sur la figure 2.

A la figure 1, le substrat 2 porte au moins une spire d'antenne 3 avec deux extrémités terminales 4, 5, reposant sur ledit substrat, et une surface de couplage 6 à l'intérieur de la spire externe 3e de l'antenne 3;

L'antenne au format carte à puce peut être réalisée en même temps qu'une pluralité d'antennes sur un substrat isolant de grand format (exemple 60 x 100 cm), notamment en matière plastique telle que PVC, PC, PET. L'antenne peut être extraite ultérieurement au niveau des pointillées « D » pouvant illustrer la périphérie de l'insert, par poinçonnage ou découpe laser en étant associée ou non à une plaque métallique.

L'antenne est réalisée ici par incrustation de fil par ultrasons mais peut être réalisée par toute technique connue telle que la gravure de cuivre, d'aluminium, la sérigraphie, un dépôt de jet de matière conductrice, une découpe d'antenne par poinçonnage ou laser dans une feuille métallique. L'antenne peut comporter ses extrémités terminales 4, 5 d'interconnexion à un module reposant aussi de préférence sur le substrat 3 sans être une obligation. Ses extrémités peuvent demeurer en l'air. Dans l'exemple, les extrémités terminales sont réalisées aussi par zigzags de fils incrustés. Ils peuvent être réalisés par toute technique connue relative à l'antenne ci-dessus.

L'assemblage 1 comprend aussi, comme indiqué ci-dessus, une plaque de métal 7 (fig. 2 ou fig. 4) comportant des perforations 9, 11 de permittivité radiofréquence, une cavité 8 de réception d'un module à puce radiofréquence.

Les perforations et la cavité traversent la plaque de part en part. Les perforations 9 et 11 sont agencées respectivement en regard de ladite spire d'antenne et de ses extrémités.

Selon une caractéristique de ce mode préféré, le procédé comprend la formation dans ladite plaque d'au moins une fente 9, 11 ou d'au moins deux fentes 9 et 11 s'étendant chacune entre des perforations situées sur des portions de spires, lesdites portions de spires étant opposées symétriquement ou diamétralement opposées l'une de l'autre ou séparées par une portion de surface de couplage. Les perforations sur les spires peuvent appartenir aux fentes.

Les portions de spires mises en relation par l'intermédiaire des fentes peuvent aussi appartenir à des portions de spires qui forment un angle droit ou sensiblement droit. Par exemple, les fentes peuvent s'étendre entre une fente disposée sur le bord transversal inférieur (portion de spires L2) et une fente oblique disposée sur le bord longitudinal à droite (portion de spires L3).

Avantageusement, les fentes allongées forment un passage électro-magnétiquement plus perméable et plus efficace qu'une série de trous de l'art antérieur offrant comparativement la même surface de métal enlevé.

En outre, les inventeurs ont observé ou déduit que des portions de spires opposées (diamétralement ou symétriquement opposées) ou séparées par une surface de couplage 6 peuvent avantageusement être mises en relation de couplage électromagnétique 26 ou en relation d'induction, via au moins la fente 19 (ou la fente 19 supplée par la fente 21).

Ces fentes 19, 21 s'étendent entre les portions de spires 22, 24 ou 23, 25 appartenant respectivement à des brins ou faisceaux de spires éloignés et séparées les uns des autres par de la surface de couplage 6 exempte de spires.

Dans l'exemple (figure 4), les portions de spires L1 et L2 ont sensiblement la largeur d'un corps de carte à puce. De fait les fentes 9 et 11 peuvent ou non avoir sensiblement les mêmes longueurs que ces portions de spires d'antenne.

Les fentes peuvent avoir différentes longueurs mais de préférence, elles sont au moins supérieure à 2 ou 3 cm.

Les portions de spires L1 et L2 sont ici symétriquement opposées car les fentes couvrent les côtés transversaux de l'antenne 3 de forme rectangulaire s'étendant le long des bords périphériques de l'insert de carte à puce ou de l'assemblage 1. Ces portions de spires (ici rectilignes) sont séparées d'une zone centrale intermédiaire 6 formant une surface de couplage électromagnétique à l'intérieur de la spire externe 3^{e} de l'antenne en forme de spirale ou bobine.

Alternativement, les perforations sur les portions de spires L1 et L2 peuvent être remplacées respectivement par des portions longitudinales L3 et L4. De fait, les perforations sur L1 ou L2 peuvent être remplacées par celles sur les portions L3 et L4.

Alternativement, les deux portions concernées peuvent comprendre une portion longitudinale L3 et une portion transversale L1 ou L2 adjacente.

Les longueurs L1, L2, L3, L4 peuvent être comprises de entre 3 cm et 5 cm. De préférence si on réalise des ouvertures ou perforations L1-L4 sur la largeur de la carte, on pourrait avoir une longueur comprise entre 2,5 cm à 4,9 cm. Si on réalise des ouvertures ou perforations L1-L4 sur la longueur longitudinale on pourrait avoir une longueur comprise entre 4,5 cm 8,2 cm.

Les fentes 9 et 11 peuvent s'étendre sur presque toute la largeur ou longueur de la plaque métallique et être juste en retrait de quelques millimètres 4 à 15 mm des bords périphériques longitudinaux.

Les fentes ont ici une largeur « La » de 5 à 6 mm pour découvrir 6 spires d'antenne.

La plaque métallique est ici une plaque d'acier d'une épaisseur égale à environ 500 µm. Elle peut varier de 150 à 650 µm. Elle peut être composée d'un assemblage de plusieurs plaques métalliques.

Alternativement, l'antenne a une forme non rectangulaire, ovale ou arrondie et les portions de spires visées peuvent être diamétralement opposées ou couvrant par exemple deux portions de cercle adjacentes.

De préférence, les portions de spire s'étendent à proximité immédiate de bordures latérales ou longitudinales de la plaque. Elles peuvent par exemple être en retrait de 2 à 5 mm de ces bordures de manière à avoir le maximum de surface de couplage à l'intérieur de la spire externe.

La cavité 8 peut ou pas communiquer avec la fente adjacente 9. Il peut y avoir une séparation métallique 10 entre la cavité et la fente.

A la figure 3, un module radiofréquence M1 a été connecté à l'antenne avant d'être assemblé à la plaque de la figure 2.

Les caractéristiques des éléments assemblés tels qu'indiqués sur les figures 2 et 3 ont permis de bons résultats de performance avec les quatre fentes 9, 11, 19, 21 réparties transversalement et pour les fentes 19 et 21 disposées sensiblement et respectivement à environ 1/3 et 2/3 de la longueur longitudinale de l'insert de carte :
- La plaque en acier de 300 µm à 450µm /
- Le corps de carte est en PVC /
- Puce SLC32G298 / Mask G298 Infineon

Les résultats sont conforment à 100% aux standard EMVCo avec un H mini de 1.1 A/m avec une antenne standard de 5 tours.

Dans l'exemple, le module M1 est connecté aux portions terminales 4, 5 d'interconnexion de l'antenne 3.

Toutefois, le module peut être connecté de manière capacitive par exemple en ayant au moins une plaque de condensateur en regard de l'une des plages 4 ou 5.

Le module M1 peut aussi être connecté de manière inductive avec l'antenne qui peut être configurée de manière à former une antenne passive ou relais. Les portions terminales 4, 5 peuvent être configurées sous forme de bobine de couplage inductif avec un module à antenne introduit dans la cavité.

Par exemple, la cavité peut comprendre de manière connue une petite bobine (non représentée) au niveau des plages 4 et 5 afin de former une boucle de couplage électromagnétique qui se couple avec un module à antenne et puce radiofréquence introduit au-dessus de la bobine de couplage.

Ainsi, la puce radiofréquence du module peut être connectée de manière ohmique ou capacitive ou inductive à ladite antenne 3.

L'assemblage ou insert 1 peut être recouvert ensuite d'au moins une ou plusieurs feuilles ou couches polymère de couverture ou de décoration. Il peut être découpé ensuite au format carte à puce standard en présentant des bords de carte métalliques.

Dans le cas où les bords de la plaque ne sont pas visibles, le procédé peut prévoir de disposé des plaques métalliques d'un format légèrement inférieur au format d'une carte à puce sur chaque substrat 3 et de laminer des feuilles de couvertures par la suite.

Préalablement à l'adjonction de feuilles de recouvrement, les fentes (voire la cavité 8) sont de préférence remplies de résine polymère. La cavité 8 peut être mise à jour ultérieurement à nouveau avec les plages d'interconnexion 4, et 5 après le laminage des feuilles de couverture

D'une manière générale, l'invention prévoit une structure d'insert métallique pour carte à puce radiofréquence comportant les caractéristiques ci-après et pouvant être obtenus notamment par les étapes du procédé illustré en figure 5.

L'insert peut comprendre généralement un assemblage 1 (figure 4) d'un substrat isolant 2 avec une plaque de métal 7.

Aux figures 2, 3, le substrat porte au moins une spire d'antenne 3 et la plaque 7 comporte des perforations de permittivité radiofréquence et une cavité 8 de réception d'un module à puce radiofréquence. La cavité peut s'effectuer en même temps que les fentes ou ultérieurement après avoir recouvert l'assemblage d'au moins une feuille de couverture ou plusieurs sur au moins une des faces principales.

Les perforations sont agencées en regard de la spire d'antenne 3.

Selon une caractéristique les perforations 9, 11 forment au moins une première et seconde fentes 9, 11 s'étendant chacune le long d'une première et seconde portions L1, L2 de spire s'étendant sur plus de 2 cm de long sur le parcours de spire 3, 3E. Les portions L1, L2 peuvent être symétriquement opposées l'une à l'autre ou séparées par une surface de couplage 6 de l'antenne.

Le cas échéant, l'assemblage peut comprendre des bâtonnets de ferrite introduits dans les fentes (et en regards de la cavité de module) pour améliorer le passage de flux électromagnétique au moins dans un sens sensiblement perpendiculaire à un plan principal de la carte et alourdir encore plus la plaque de métal. Les bâtonnets de ferrite permettent au moins d'améliorer la communication vers une face de la carte.

A la figure 5 des étapes du procédé sont illustrées.
- A l'étape 100, une antenne 3 est réalisée sur un substrat
- A l'étape 110, au moins une fente 19 (et/ou 21) peut être réalisée dans une plaque de métal (et le cas échéant directement aussi une cavité 8, ou découpe 18 pour recevoir un module) ; selon un mode préféré de l'invention chaque fente s'étend entre des portions de spires distantes ou entre des perforations situées sur des portions de spires symétriquement opposées l'une de l'autre ou séparées par une portion de surface de couplage. Les fentes 19 et/ou 21 s'étendent transversalement sur la largeur de la plaque de métal.

De préférence, d'autres perforations de toute forme (rondes, carrées) peuvent être réalisées sur les spires. Dans l'exemple, des perforations 9 et/ou 11, sont ici sous forme préférée de fentes ou de perforations allongées continues en regard et centré sur des spires en dépassant d'environ 1 mm la largeur des spires de part et d'autre de la largeur ;
- A l'étape 120 du substrat à antenne est superposé (assemblé) avec la plaque de métal évidée à l'étape précédente, les deux fentes 19, 21 étant agencées sur des portions d'antenne ;
- A l'étape 130, un module à puce radiofréquence est connectée à une interface de communication (Le module et l'antenne peuvent être configurés pour une connexion (plages d'interconnexion, bobine de couplage, capacité)

A l'étape 140 d'une ou plusieurs feuilles de couverture sont laminée(s) sur un ou les deux faces principales externes de l'assemblage 1.

Le cas échéant, plusieurs perforations 19 et 21 joignant des portions de spires disposées sur des côtés opposés, peuvent être suffisantes pour améliorer la communication radiofréquence, indépendamment de la présence ou pas des perforations 9 et 11.

D'une autre manière deux fentes diamétralement opposées peuvent être suffisantes pour améliorer la communication.

Dans un cas de figure alternatif, les deux fentes 19 et 21 peuvent être positionnées à la place des fentes 9 et 10 sur les spires transversales et aussi sur les angles de l'antenne 3.

Dans un autre cas encore, les deux fentes 19 et 21 peuvent être complétées par une ou deux fentes 9 et 11.

Dans un autre cas encore également, la carte peut comprendre une fente 9 ou une fente 11 en regard et le long d'une portion de spires en bordure de carte associée à au moins une fente parmi les fentes 19 et 21 (joignant des portions de spires opposées) et situées en région sensiblement centrale de la zone de couplage 6.

Ainsi, l'invention peut améliorer ses performances de communication en ayant au moins deux fentes du type 19 ou 21 ou au moins une fente de type 19 ou 21 (mais deux au moins de préférence) associée à au moins une fente ou des perforations de toute forme (continue ou discontinue sur un même côté de spire L1 à L4) du type 9 ou 11.

Les fentes sont ici présentées en étant orientées dans le sens transversal de la carte mais elles peuvent être orientées dans le sens longitudinal.

La carte à puce selon l'invention peut utiliser un module à puce radiofréquence hybride comportant des plages de contacts qui peuvent être également perforées, en dehors des zones réservées de contact standardisés afin d'améliorer encore la permittivité électromagnétique.

Le cas échéant, la plaque de métal peut comprendre des amincissements « A » en épaisseur le long et en regard des spires pour absorber une surépaisseur éventuelle des fils d'antenne 3.

Dans tous les exemples, la plaque du corps de carte peut comprendre un assemblage de plaques métalliques soudées ensemble ou assemblées par l'intermédiaire d'une couche fine adhésive. Ce dernier assemblage peut améliorer la tenue mécanique de flexion / torsion.

## Revendications

1. Procédé de fabrication d'un insert métallique pour carte à puce radiofréquence, ledit procédé comprenant les étapes de formation ou fourniture d'un assemblage (1) comportant un substrat isolant (2) portant :
- au moins une spire d'antenne (3) avec deux extrémités terminales (4, 5) ou une interface de couplage, reposant sur ledit substrat,
- une plaque de métal (7) comportant des perforations de permittivité radiofréquence et une cavité (8) de réception d'un module à puce radiofréquence, traversant la plaque et agencées respectivement en regard de ladite spire d'antenne et de ses extrémités,
**caractérisé en ce qu'**il comprend la formation dans ladite plaque d'au moins une fente (19, 21)
ou d'au moins deux fentes (19, 21) s'étendant chacune entre des perforations situées sur des portions de spires (L3, L4), lesdites portions de spires étant symétriquement ou diamétralement opposées l'une de l'autre ou séparées par une portion de surface (6) de couplage.

2. Procédé selon la revendication précédente, **caractérisé en ce que** lesdites perforations comprennent,
- au moins une fente (9, 11) s'étendant le long d'une portion (L1, L2) de ladite au moins une spire (3),
- ou au moins deux fentes (9, 11) s'étendant le long de deux portions (L1, L2) de ladite spire, lesdites deux portions étant symétriquement ou diamétralement opposées l'une à l'autre ou séparées par une surface (6) de couplage.

3. Procédé selon l'une des revendications précédentes, **caractérisé en ce que** lesdites portions de spire s'étendent à proximité immédiate de bordures latérales ou longitudinales de la plaque.

4. Procédé l'une des revendications précédentes, **caractérisé en ce que** lesdites fentes forment un passage électromagnétiquement perméable.

5. Procédé selon l'une des revendications précédentes, **caractérisé en ce que** ladite puce est connectée de manière ohmique ou capacitive ou inductive à ladite antenne.

6. Procédé selon l'une des revendications précédentes, **caractérisé en ce que** ledit insert (10) est recouvert d'au moins une ou plusieurs feuilles polymère de couverture ou de décoration.

7. Insert métallique pour carte à puce radiofréquence, ledit insert comprenant un assemblage (1) d'un substrat isolant(2) avec une plaque de métal (7), ledit substrat portant au moins une spire d'antenne (3) et ladite plaque (7) comportant des perforations de permittivité radiofréquence et une cavité (8) de réception d'un module à puce radiofréquence, lesdites perforations étant agencées en regard de ladite spire d'antenne,
**caractérisé en ce qu'**il comprend dans ladite plaque, au moins une fente (19, 21) ou au moins deux fentes (19, 21) s'étendant chacune entre des perforations situées en regard de portions de spires (L3, L4), lesdites portions de spires étant symétriquement ou diamétralement opposées l'une de l'autre ou séparées par une portion de surface de couplage.

8. Insert selon la revendication précédente, **caractérisé en ce que** lesdites perforations comprennent,
- au moins une fente (9, 11) s'étendant le long d'une portion (L1, L2) de ladite au moins une spire (3),
- ou au moins deux fentes (9, 11) s'étendant le long de deux portions (L1, L2) de ladite spire, lesdites deux portions étant symétriquement ou diamétralement opposées l'une à l'autre ou séparées par une surface de couplage.

9. Insert selon l'une des revendications 7 à 8, **caractérisé en ce que** l'assemblage (1) comprend des bâtonnets de ferrite introduits dans les fentes (9, 11, 19, 11).

10. Carte à puce comprenant l'insert selon l'une des revendications 7 à 9.
